Europäisches Patentamt

(19) European Patent Office

Office européen des brevets

(11) Numéro de publication: **0 051 757**
**B1**

(12) **FASCICULE DE BREVET EUROPEEN**

(45) Date de publication du fascicule du brevet: **06.02.85**

(51) Int. Cl.⁴: **A 23 B 5/02**

(21) Numéro de dépôt: **81108187.6**

(22) Date de dépôt: **12.10.81**

(54) **Produit hautement concentré de blanc d'oeuf, ou d'oeuf entier salé, et son procédé de préparation.**

(30) Priorité: **17.10.80 FR 8022309**

(43) Date de publication de la demande:
**19.05.82 Bulletin 82/20**

(45) Mention de la délivrance du brevet:
**06.02.85 Bulletin 85/06**

(84) Etats contractants désignés:
**AT BE CH DE FR GB IT LI LU NL SE**

(56) Documents cités:
**FR-A- 369 967**
**FR-A- 389 309**
**FR-A- 679 991**
**FR-A-1 230 475**
**FR-A-2 047 412**
**FR-A-2 133 959**
**FR-A-2 276 787**
**FR-E- 90 210**
**GB-A- 314 273**

(73) Titulaire: **Liot, Roger**
**134-144 rue Laferrière**
**F-94000 Créteil (FR)**

(73) Titulaire: **ROBERT LIOT S.A.**
**134-144 rue Laferrière**
**F-94000 Créteil (FR)**

(72) Inventeur: **Liot, Roger**
**134-144 rue Laferrière**
**F-94000 Créteil (FR)**

(74) Mandataire: **Casalonga, Axel et al**
**BUREAU D.A. CASALONGA OFFICE JOSSE &**
**PETIT Baaderstrasse 12-14**
**D-8000 München 5 (DE)**

Courier Press, Leamington Spa, England.

## Description

La présente invention concerne un produit hautement concentré de blanc d'oeuf, ou d'oeuf entier salé, susceptible de contenir des additifs alimentaires, ayant d'excellentes propriétés de conservation et de texture, ainsi que son procédé de préparation.

Le demandeur a déjà décrit dans le brevet français n° 2 276 787 un procédé de conservation d'un produit d'oeuf selon lequel, la pression osmotique est augmentée jusqu'à au moins 30 atmosphères par concentration, de préférence par ultrafiltration, et par l'addition d'ingrédients comme le sel et le sucre, en présence d'agents destructeurs de microorganismes, de façon à obtenir un relentissement du développement des microorganismes initialement contenus dans le produit, leur vitesse de croissance devenant inférieure à leur vitesse de destruction.

Mais ce procédé nécessite la mise en oeuvre d'un test biologique de contrôle du produit d'oeuf à traiter. En outre, ce procédé concerne seulement le traitement d'un produit d'oeuf dont le taux de concentration est relativement faible et qui contient des quantités importantes de sel et/ou de sucre.

Le demandeur a encore décrit dans le brevet français n° 2.367.435, un procédé de conservation d'un produit d'oeuf concentré ou non concentré selon lequel, d'une part, la pression osmotique est augmentée jusqu'à 25 atmosphères, et d'autre part, les gaz dissous dans le produit d'oeuf initial sont éliminés jusqu'à une teneur en oxygène inférieure à 3 parties par million. Mais le procédé comporte le contrôle de la teneur en oxygène, les produits préparés ont un taux de concentration assez faible, et les proportions des ingrédients introduits sont relativement élevées.

On connaît également le brevet français n° 679.991 qui décrit la préparation d'un produit d'oeuf ayant un taux de concentration élevé. Mais la concentration s'effectue par évaporation sous vide en présence des ingrédients, ce qui provoque une dénaturation des protéines, et les proportions des ingrédients introduits dans le produit l'oeuf sont également élevées, notamment en ce qui concerne le sel.

Par ailleurs, le brevet US 3.640.731 décrit un procédé de conservation d'un produit d'oeuf prenant en considération la teneur en eau libre dans le produit préparé, mais utilisant un produit d'oeuf sec comme produit de départ.

Enfin le brevet français 1.230.475 concerne un procédé de concentration très général dans lequel les produits d'oeufs ne sont mentionnés qu'à titre d'éléments entrant dans des crèmes, en vue d'obtenir un produit final en poudre. Dans ce document on prévoit l'utilisation d'un gaz inerte et on mentionne le gaz carbonique alors qu'il convient au contraire d'éviter ce gaz en raison de son action nocive sur les produits d'oeufs.

Le demandeur a maintenant constaté de façon inattendue qu'il était possible de préparer un produit concentré de blanc d'oeuf ou d'oeuf entier faiblement salé, susceptible de contenir d'autres ingrédients et arômes alimentaires, et présentant d'excellentes propriétés de conservation et de texture, lorsque d'une part, le taux de concentration du produit d'oeuf final est suffisamment élevé, et que d'autre part, la température du produit au cours du traitement ne dépasse pas une température donnée.

Le procédé de l'invention consiste, soit à concentrer le blanc d'oeuf initial jusqu'à un extrait sec de 55% à 65% par rapport au produit d'oeuf final, de façon telle qu'à chaque instant et en tout point de l'installation, la température du produit en traitement soit maintenue entre 43°C et 47°C; soit à concentrer l'oeuf entier initial jusqu'à un extrait sec de 55 à 62% en oeuf entier par rapport au produit d'oeuf final, de façon telle qu'à chaque instant et en tout point de l'installation la température du produit en traitement soit maintenue entre 53°C et 60°C, une quantité comprise entre 2 et 4% et de préférence de 3 à 3,6% en poids de sel ajouté par rapport au produit d'oeuf final étant ajoutée au produit d'oeuf entier, avant, pendant, ou après sa concentration. Le produit obtenu peut être conservé sous atmosphère inerte au moins trois mois à la température ambiante et une semaine supplémentaire à 37°C.

Sous réserve de veiller rigoureusement au maintien de la température, on utilise de préférence la concentration par ultrafiltration dans une installation en continu comportant un module d'ultrafiltration et une pompe pour alimenter le module en produit d'oeuf à concentrer, la température du produit en traitement étant controlée de façon continue notamment à l'entrée et à la sortie du module d'ultrafiltration ainsi que dans la pompe. On maintient la température du produit en traitement, en agissant notamment sur le débit de pompe qui est monté avec un moteur en courant continu, soit en refroidissant de façon appropriée le corps de pompe, par exemple par une circulation d'eau froide.

Pour l'oeuf entier, on peut également utiliser en totalité ou dans la phase finale un procédé de concentration par balayage de la surface du produit traité à l'aide d'un gaz inerte et toute en agitant.

Selon le procédé par balayage, on place l'oeuf entier intial dans un récipient muni d'une agitation et d'un bain-marie ou d'un chemisage avec circulation d'un fluide chauffé, de façon que la température soit maintenue entre 53°C et 60°C. Le produit en traitement est soumis à une agitation sans turbulence évitant la formation de mousses et de croûtes, et la surface du produit est balayée à l'aide d'un courant de gaz inerte sec à une température ne dépassant pas 60°C.

Il est nécessaire de renouveler constamment la surface du produit d'oeuf qui doit rester parfaitement homogène. Le produit d'oeuf entier est maintenu de préférence à une température voisine de celle du gaz inerte et il est soumis de préférence à une agitation selon un mouvement liquide de bas en haut, de façon que le produit traité soit le plus homogène possible tout en évitant la formation de mousses et de croûtes.

Selon une variante, le gaz inerte chargé d'humidité à la sortie du réacteur est ensuite purgé de cette humidité, réchauffé à la température de la masse du produit traité, et dirigé à nouveau vers la surface du produit, l'élimination de l'eau s'effectuant lors en circuit fermé.

Tout appareillage ou installation d'évaporation, notamment en couche mince, fonctionnant aux températures précitées en présence d'un courant de gaz inerte sec, peut convenir pour effectuer la concentration par balayage selon l'invention.

Selon le procédé par ultrafiltration, on effectue celle-ci pour l'oeuf entier dans les conditions analogues à celles utilisées pour le traitement du blanc d'oeuf comme indiqué ci-dessus. On veille tout particulièrement à ce que la température du produit en traitement soit maintenue entre 53°C et 60°C, notamment à l'entrée et à la sortie du module d'ultrafiltration ainsi que dans la pompe servant à alimenter le module précité.

Enfin la concentration peut s'effectuer avantageusement en un premier stade de pré-concentration de l'oeuf entier jusqu'à un extrait sec d'environ 45 à 50%, notamment par ultrafiltration, et en un second stade de concentration par balayage et agitation, comme indiqué ci-dessus.

On utilise comme produit d'oeuf intial, des oeufs de poule en général des oeufs de "ramassage" de qualité courante, et ayant été pondus 8 à 30 jours avant d'être cassés et traités.

Le sel utilisé pour le salage de l'oeuf entier qui est constitué essentiellement de chlorure de sodium désigne aussi bien le sel gemme que le sel marin, et peut être introduit à n'importe quel stade du procédé, soit directement, soit sous la forme d'une solution dans de l'eau, soit dans un prémélange avec de l'oeuf entier.

Dans la préparation du produit concentré d'oeuf entier, l'extrait sec est exprimé en oeuf entier, c'est-à-dire sans tenir compte du sel ajouté. Le sel ajouté est d'ailleurs déterminé dans le produit final après avoir retranché les quantités de sel déjà présentent dans l'oeuf initial.

Le produit concentré de blanc d'oeuf ou d'oeuf entier selon l'invention peut également contenir d'autres ingrédients et arômes alimentaires, qui sont ajoutés à un moment quelconque au cours du traitement, en une quantité de l'ordre de 0,1 à 2%, et qui peuvent également comprendre des sucres tels que le saccharose.

Lorsque le sel est ajouté au début ou au cours de l'ultrafiltration, une partie du sel est éliminé avec le filtrat, et si nécessaire, la teneur en sel est ensuite ajustée de façon souhaitée dans le produit concentré d'oeuf entier final, tout en restant dans la gamme de l'invention.

A la fin du procédé de préparation, on soumet le produit concentré de blanc d'oeuf ou d'oeuf entier salé contenant éventuellement d'autres ingrédients et arômes alimentaires aux analyses habituelles, notamment à une analyse bactériologique pour déterminer sa teneur en nombre de germes aérobies totaux par gramme, que l'on désignera par la suite par l'expression "flore totale".

Parmi les germes précités, on détermine notamment les antérobactéries, les staphylocoques et les salmonelles.

On constate que le produit concentré de blanc d'oeuf ou d'oeuf entier salé obtenu selon le procédé de l'invention a une flore totale inférieure à 20.000 germes par gramme. Ce produit est alors stocké sous gaz inerte, ou bien emballé sous gaz inerte dans des boîtes métalliques et qui sont ensuite serties.

Des contrôles effectués après trois mois de stockage et après avoir ensuite placé le produit pendant 8 jours en salle chaude à 37°C, montrent que non seulement le nombre de germes par gramme n'a pas augmenté, mais qu'il a considérablement diminué.

Le gaz inerte utilisé aussi bien pour le balayage à la surface de l'oeuf entier que pour le stockage ou l'emballage est un gaz inerte alimentaire, tel que l'azote, l'oxyde nitreux, un gaz rare comme l'argon, ou d'un fréon comme le fréon 114, c'est-à-dire le chloro-1-pentafluoro-1,1,2,2-éthane.

L'invention concerne le procédé de préparation d'un produit concentré de blanc d'oeuf ou d'oeuf entier salé, en vue de sa conservation, comme décrit ci-dessus.

L'invention concerne également un produit concentré de blanc d'oeuf susceptible d'être obtenu par le procédé de l'invention et ayant un extrait sec de 55 à 65%, contenant moins de 20.000 germes de micro-organismes par gramme après une conservation sous atmosphère inerte, de trois mois à la température ambiante et d'une semaine supplémentaire à 37°C. Le produit précité se présente sous la forme d'une pâte qui, après réhydratation jusqu'à environ 12% d'extrait sec, a des propriétés de foisonnement et de coagulation analogues à celles d'un blanc d'oeuf frais, même après trois mois de stockage, ce qui est tout à fait inatendu pour un produit d'oeuf ne contenant aucun ingrédient en vue de sa conservation. Il convient tout particulièrement à la préparation de meringues.

L'invention concerne aussi un produit concentré d'oeuf entier susceptible d'être obtenu par le procédé de l'invention et ayant un extrait sec, de 55 à 62% en oeuf entier, une teneur en sel ajouté comprise entre 2 et 4% et de préférence de 3 à 3,6% en poids par rapport au produit d'oeuf final, et contenant moins de 20.000 germes de microorganismes par gramme après une conservation sous atmosphère inerte, de trois mois à la température ambiante et d'une semaine supplémentaire à 37°C, ce qui est tout à fait inattendu pour un produit concentré d'oeuf entier ayant une aussi faible teneur en sel. Le produit précité se présente sous la forme d'une pâte facile à disperser dans l'eau et dont la viscosité peut varier de 12.000 à 50.000 centipoises (12.000 à 50.000 mPa.s). Il peut contenir seulement du sel, mais il peut également contenir avantageusement d'autres ingrédients alimentaires en faible quantité, notamment des arômes. On n'utilise après réhydratation jusqu'à environ 24% d'extrait sec, en pâtisserie ou pour toute préparation culinaire notamment pour la préparation d'omelettes, d'une façon analogue à celle de l'oeuf entier frais, étant entendu que l'on peut également choisir le taux de réhydratation souhaité, pour certaines préparations.

Le produit concentré d'oeuf entier de l'invention est emballé en boîtes métalliques serties ou en tubes, ce dernier mode d'emballage étant tout particulièrement apprécié.

Les exemples suivants, dans lesquels on a utilisé des oeufs de poule "de ramassage" de qualité courante, permettront de mieux comprendre l'objet de l'invention. Sauf mention contraire, les pourcentages s'entendent toujours en poids par rapport au produit considéré, les températures sont indiquées en degré centrigrade, et l'extrait sec du produit final est exprimé en retranchant les ingrédients ajoutés.

Exemple 1
Préparation de blanc d'oeuf hautement concentré.

On concentre par ultrafiltration 110 kg de blanc d'oeuf parfaitement mélangé, ayant un extrait sec de 12,3% et contenant 35.000 germes de microorganismes par gramme. On utilise à cet effet un module "UFP 8" d'ultrafiltration fabriqué par Rhône Poulenc, comprenant 24 plaques supportant des membranes d'acrylonitrile du type 3.038 ayant une zone de coupure de 20.000 et une surface de 0,1 m2 chacune, soit au total 2,4 m2.

Le module d'ultrafiltration est alimenté en blanc d'oeuf à l'aide d'une pompe volumétrique munie d'un piston en queue de cochon, montée avec un moteur en courant continu, le débit du blanc d'oeuf circulant en circuit fermé dans le module d'ultrafiltration étant de 12.000 litres/heure.

Le corps de pompe est refroidi par de l'eau à 5°C, et la température maximale du blanc d'oeuf en traitement, contrôlée à l'entrée et à la sortie du module d'ultrafiltration ainsi que dans la pompe n'a pas dépassé 46 à 47°C.

Après 6 heures de concentration on obtient un produit concentré de blanc d'oeuf ayant un extrait sec de 60%, une flore totale de 6.000 germes/gramme, et que l'on emballe sous atmosphère d'azote dans des boîtes métalliques serties.

Après un stockage de trois mois à la température ambiante, on constate que la flore totale est de 2.000 germes/g.

Toujours après un stockage de trois mois et un séjour supplémentaire de 8 jours à 37°C, la flore totale est encore de 2.000 germes/g.

Le produit concentré de blanc d'oeuf ainsi préparé, réhydraté jusqu'à environ 12% d'extrait sec, convient parfaitement à la préparation de meringues. Il présente des qualités de foisonnement et de coagulation tout à fait comparables à celles du blanc d'oeuf frais.

Exemple 2
Préparation d'un produit concentré de blanc d'oeuf.

On concentre 110 kg de blanc d'oeuf parfaitement mélangé, ayant un extrait sec de 11,7% et contenant 26.000 germes/g, dans la même installation et dans les mêmes conditions que dans l'exemple 1, sauf que la température du produit en traitement, à chaque instant et en tout point de l'installation est réglé de façon qu'elle ne dépasse pas 43 à 44°C.

Après 7 heures de concentration, on obtient un produit concentré de blanc d'oeuf ayant un extrait sec de 55%, ayant une flore totale de 20.000 germes/g, et que l'on emballe sous azote dans des boîtes métalliques serties.

Après trois mois de stockage à la température ambiante, la flore totale était de 6.000 germes/g. Dans une boîte ouverte après 8 jours supplémentaires à la température de 37°C, la flore totale était de 8.000 germes/g.

Après réhydratation jusqu'à 12% d'extrait sec, ce produit convient parfaitement à la préparation de meringues.

Exemple 3
Préparation d'un produit concentré de blanc d'oeuf.

On concentre 110 kg de blanc d'oeuf ayant un extrait sec de 12,1% et contenant une flore totale de 40.000 germes/g, dans la même installation et de la même façon que dans l'exemple 1 en réglant la température du produit en traitement, de façon qu'à chaque instant et en tout point elle ne dépasse pas 46 à 47°C.

On effectue la concentration pendant une durée de 8 heures 30, et l'on obtient un produit concentré de blanc d'oeuf ayant un extrait sec de 65% et une flore totale de 15.000 germes/g, ce produit étant ensuite emballé sous azote dans des boîtes métalliques que l'on ferme par sertissage.

Après un stockage de trois mois à la température ambiante, le produit emballé a une flore totale inférieure à 1.000 germes/g, de même que le produit ayant été soumis à un stockage supplémentaire de 8 jours à 37°C.

Le produit stocké comme indiqué ci-dessus, est réhydraté jusqu'à environ 12% d'extrait sec, convient parfaitement à la préparation de meringues.

Exemple 4

Préparation d'un produit concentré d'oeuf entier salé.

On concentre dans un premier temps 40 kg d'oeuf entier ayant un extrait sec de 24,5% et une flore totale de 35.000 germes/g, par ultrafiltration dans les conditions de l'exemple 1 à une température ne dépassant pas 55°C, jusqu'à l'obtention d'un produit d'oeuf entier pré-concentré ayant un extrait sec de 47%.

On place 2 kg du produit d'oeuf pré-concentré dans un récipient ouvert entouré d'un bain-marie maintenu à la température de 55°C et l'on introduit tout en agitant 52 g de sel.

On balaye la surface du produit d'oeuf soumis à une agitation sans turbulence pour éviter la formation de mousses et de croûtes avec un courant d'azote séché à une température ne dépassant pas 55°C. On effectue l'agitation et le balayage de gaz dans les conditions indiquées ci-dessus pendant un laps de temps de 3 heures.

On obtient après dégazage sous un vide de 40 mm de mercure (53.33 mbar), un produit concentré d'oeuf entier ayant un extrait sec de 60% en oeuf entier, une teneur en sel ajouté de 3%, une teneur en eau libre $a_w$ de 0,90, et une flore totale après un maintien de 15 heures à 55°C sous atmosphère d'azote, inférieure à 1.000 germes/g. La teneur en germes enterobactéries est inférieure à 10, en staphylocoques inférieure à 100 et les salmonelles sont absentes sur une prise de 25 g.

Le produit conservé pendant trois mois sous atmosphère d'azote présente toujours une flore totale inférieure à 1.000 germes/g.

Le produit se présente sous la forme d'une pâte assez peu visqueuse, facile à disperser dans l'eau, et qui après réhydratation jusqu'à environ 24% d'extrait sec peut être directement utilisée en patisserie ou pour les préparations culinaires, notamment la préparation d'omelettes, d'une façon tout à fait comparable à celle obtenue avec les oeufs entiers frais.

On peut obtenir un produit d'oeuf entier salé selon l'invention contenant 2% de sel, en opérant comme indiqué ci-dessus mais en utilisant 2 kg d'oeuf entier concentré par ultrafiltration ayant un extrait sec de 55% placés dans un récipient entouré d'un bain-marie à la température de 55°C et en introduisant dans l'oeuf concentré 41 g de sel tout en agitant jusqu'à l'obtention d'un mélange homogène que l'on empaquette immédiatement.

Le produit d'oeuf entier ainsi obtenu présente une analyse bactériologique analogue à celle du produit d'oeuf entier contenant 3% de sel, et une excellente conservation malgré sa faible teneur en sel.

Exemple 5

Préparation d'un produit concentré d'oeuf entier par concentration et chauffage avec évaporation.

On concentre comme dans l'exemple 4, 40 kg d'oeuf entier ayant un extrait sec de 25% et une flore totale de 42.000 germes/g jusqu'à l'obtention d'un produit pré-concentré d'oeuf entier ayant un extrait sec de 47%.

On traite 2 kg du produit pré-concentré d'oeuf entier, par agitation et balayage comme dans l'exemple 4 à une température de 55°C, la quantité de sel ajouté étant de 70 g.

Après un laps de temps de 4 heures, on obtient un produit concentré d'oeuf entier ayant un extrait sec de 61,9% en oeuf entier, une teneur de 3,9% en sel ajouté, une teneur en eau libre $a_w$ de 0,90 et une flore totale inférieure à 1.000 germes/g et ne contenant ni entérobactéries, ni staphylocoques.

Après un stockage de trois mois sous atmosphère d'azote, la flore totale est toujours inférieure à 1.000 germes/g.

Le produit obtenu sous la forme d'une pâte convient parfaitement à la préparation d'omelettes.

Exemple 6

Préparation d'un produit concentré d'oeuf entier, par ultrafiltration.

On concentre par ultrafiltration, 22,250 kg d'oeuf entier ayant un extrait sec de 24% et une flore totale de 40.000 germes/g, la température du produit en traitement, à chaque instant et en tout point de l'installation ne dépassant pas 59°C, en utilisant le module d'ultrafiltration "UFP 8" de l'exemple 1 mais comprenant 6 plaques de 0,1 m2 chacune. Le module est alimenté par une pompe du type S 4 fabriquée par la firme MOUVEX ayant un débit maximum de 4.000 litres/heure à 700 tr/mn, et tournant à mi-régime.

Après 6 heures d'ultrafiltration, on introduit progressivement 1,0 kg de sel dans le mélange en circulation, et l'on continue l'ultrafiltration pendant une durée totale de 12 heures.

On obtient ainsi un produit concentré d'oeuf entier ayant un extrait sec de 57,7% en oeuf entier, une teneur de 3,9% en sel ajouté, et qui se présente sous la forme d'une pâte dont on remplit, sous atmosphère d'azote, des pots en verre, des boîtes métalliques ensuite fermées par sertissage et des tubes, que l'on place dans une chambre chaude à 54°C.

Après un laps de temps de 20 heures dans la salle chaude, on constate que le produit contenu dans les pots, les boîtes et les tubes a une flore totale inférieure à 2500 germes/g, les salmonelles étant absentes.

Après un stockage de trois mois à la température ambiante, la flore totale est inférieure à 3.000 germes/g quel que soit le type d'emballage.

Le produit obtenu convient parfaitement à la préparation d'omelettes.

La température du produit d'oeuf traité, à l'entrée et à la sortie du module d'ultrafiltration, ainsi que le corps de pompe de la pompe d'admission au module, a été contrôlée à chaque instant et n'a pas dépassé 59°C.

En opérant selon l'exemple 6, on peut également introduire un arôme, avant, pendant ou après l'ultrafiltration, pour obtenir un produit concentré d'oeuf entier ayant de remarquables propriétés culinaires.

Dans chacun des exemples 4 à 6, la teneur en chlorure de sodium ajoutée est calculée par différence en retranchant de la teneur totale en chlorure de sodium, le chlorure de sodium contenu dans l'oeuf frais initial.

Dans les exemples 4 à 6, la température du produit en traitement a été vérifiée de façon continue, notamment à l'entrée et à la sortie du module d'ultrafiltration, ainsi que dans la pompe volumétrique alimentant le module précité, le débit étant réglé ainsi que le refroidissement de la pompe pour obtenir la température indiquée ne dépassant pas 60°C.

**Revendications**

1. Procédé de préparation d'un produit concentré d'oeuf entier salé ou de blanc d'oeuf susceptible de contenir des ingrédients et arômes alimentaires et d'être conservé à l'abri de l'air, caractérisé par le fait:

— soit qu'on concentre le blanc d'oeuf initial en maintenant la température du produit entre 43 et 47°C, la concentration étant poursuivie jusqu'à l'obtention d'un extrait sec de 55 à 65% par rapport au produit d'oeuf final;

— soit qu'on concentre l'oeuf entier initial jusqu'à un extrait sec de 55 à 62% par rapport au produit d'oeuf final tout en maintenant la température du produit entre 53 et 60°C, avec addition, avant, pendant ou après la concentration, d'une quantité comprise entre 2 et 4% et de préférence de 3 à 3,6% en poids de sel par rapport au produit d'oeuf final;

— et qu'on peut conserver sous atmosphère inerte le produit concentré de blanc d'oeuf ou d'oeuf entier ainsi obtenu, au moins trois mois à la température ambiante et une semaine supplémentaire à 37°C.

2. Procédé selon la revendication 1, caractérisé par le fait qu'on effectue la concentration par ultrafiltration, la teneur en sel étant éventuellement ajustée après l'ultrafiltration.

3. Procédé de préparation d'un produit concentré d'oeuf entier selon la revendication 1, caractérisé par le fait qu'on effectue la concentration, en totalité ou dans sa partie finale, par balayage de la surface du produit à l'aide d'un gaz inerte sec à une température ne dépassant pas 60°C, le produit étant en mouvement ou étant soumis à une agitation sans turbulence évitant la formation de mousses et de croûtes.

4. Procédé selon l'une des revendications 1 à 3, caractérisé par le fait que le sel est introduit, soit directement, soit sous la forme d'une solution dans de l'eau, soit dans un prémélange avec de l'oeuf entier.

5. Produit concentré de blanc d'oeuf, susceptible d'être obtenu par le procédé selon l'une des revendication 1 à 4, caractérisé par le fait qu'il a un extrait sec de 55 à 65%, et qu'il contient moins de 20.000 germes de microorganismes par gramme après une conservation sous atmosphère inerte de trois mois à la température ambiante et d'une semaine supplémentaire à 37°C.

6. Produit concentré d'oeuf entier susceptible d'être obtenu par le procédé selon l'une des revendications 1 à 4, caractérisé par le fait qu'il a un extrait sec de 55 à 62%, une teneur en sel ajouté comprise entre 2 et 4% et de préférence de 3 à 3,6% en poids par rapport au produit d'oeuf final, et qu'il contient moins de 20.000 germes de microorganismes par gramme après une conservation sous atmosphère inerte de trois mois à la température ambiante et d'une semaine supplémentaire à 37°C.

7. Produit de blanc d'oeuf ou d'oeuf entier selon l'une des revendications 5 ou 6, caractérisé par le fait qu'il contient en outre des arômes alimentaires.

**Patentansprüche**

1. Verfahren zur Herstellung eines konzentrierten Produktes aus gesalzenem Vollei oder aus Eiweiß, das Zutaten und Nahrungssaromen enthalten und das unter Luftabschluß konserviert werden kann, dadurch gekennzeichnet:

— daß man entweder das rohe Eiweiß konzentriert, indem man die Temperatur des Produktes zwischen 43 und 47°C hält, wobei die Konzentrierung bis zur Erreichung einer Trockensubstanz von 55 bis 65%, bezogen auf das fertige Eiprodukt, fortgesetzt wird;

— oder daß man das rohe Vollei bis zu einer Trockensubstanz von 55 bis 62%, bezogen auf das endgültige Eiprodukt, konzentriert, indem man die Temperatur des Produktes zwischen 53 und 60°C hält, unter Zusatz einer zwischen 2 und 4% und vorzugsweise von 3 bis 3,6 Gew.-%, bezogen auf das endgültige Eiprodukt, liegenden Menge Salz vor, während oder nach der Konzentrierung;

— und daß man das so erhaltene konzentrierte Produkt aus Eiweiß oder Vollei unter inerter Atmosphäre wenigstens drei Monate bei Raumtemperatur und eine zusätzliche Woche bei 37°C konservieren kann.

2. Verfahren nach Anspruch 1, dadurch gekennzeichnet, daß man die Konzentrierung durch Ultrafiltration ausführt, wobei der Salzgehalt gegebenenfalls nach der Ultrafiltration eingestellt wird.

3. Verfahren zur Herstellung eines konzentrierten Volleiproduktes nach Anspruch 1, dadurch gekennzeichnet, daß man die Konzentrierung zur Gänze oder in ihrem letzten Abschnitt durch Spülen der Oberfläche des Produktes mit Hilfe eines trockenen Inertgases bei einer 60°C nicht überschreitenden Temperatur ausführt, wobei das Produkt in Bewegung oder einer turbulenzfreien und die Bildung von Schäumen und Krusten verhindernden Rührung unterworfen ist.

4. Verfahren nach einem der Ansprüche 1 bis 3, dadurch gekennzeichnet, daß das Salz entweder direkt oder in Form einer Lösung in Wasser oder in einer Vormischung mit Vollei eingeführt wird.

5. Konzentriertes Eiweißprodukt, das nach dem Verfahren nach einem der Ansprüche 1 bis 4 erhältlich ist, dadurch gekennzeichnet, daß es 55 bis 65% Trockensubstanz enthält und daß es nach einer Konservierung unter Inertatmosphäre von drei Monaten bei Raumtemperatur und einer zusätzlichen Woche bei 37°C weniger als 20.000 Keime von Mikroorganismen je Gramm enthält.

6. Konzentriertes Volleiprodukt, das nach dem Verfahren nach einem der Ansprüche 1 bis 4 erhältlich ist, dadurch gekennzeichnet, daß es 55 bis 62% Trockensubstanz, einen Gehalt an zugesetztem Salz zwischen 2 und 4%, vorzugsweise von 3 bis 3,6 Gew.-%, bezogen auf das endgültige Eiprodukt, hat und daß es nach einer Konservierung unter Inertatmosphäre von drei Monaten bei Raumtemperatur und einer zusätzlichen Woche bei 37°C weniger als 20.000 Keime von Mikroorganismen je Gramm enthält.

7. Produkt aus Eiweiß oder Vollei nach einem der Ansprüche 5 oder 6, dadurch gekennzeichnet, daß es zusätzlich Nahrungsaromen enthält.

**Claims**

1. Process for the preparation of a concentrated product of salted whole egg or of egg white capable of containing food ingredients and flavourings and of being preserved protected from the air, characterised in that:

— either the initial egg white is concentrated while maintaining the temperature of the product between 43 and 47°C, the concentration being continued until there has been obtained a dry solids content of 55 to 65% with respect to the final egg product;

— or the initial whole egg is concentrated to a dry solids content of 55 to 62% with respect to the final egg product while maintaining the temperature of the product between 53 and 60°C, with addition, before, during or after the concentration, of a quantity of salt between 2 and 4%, and preferably from 3 to 3.6%, by weight with respect to the final egg product;

— and the concentrated egg white or whole egg product thus obtained can be preserved under an inert atmosphere for at least three months at room temperature and one supplementary week at 37°C.

2. Process according to Claim 1, characterised in that the concentration is performed by ultrafiltration, the salt content being optionally adjusted after the ultrafiltration.

3. Process for the preparation of a concentrated whole egg product according to Claim 1, characterised in that the concentration is performed, in its entirety or in its final part, by sweeping the surface of the product with a dry inert gas at a temperature not exceeding 60°C, the product being in motion or being subjected to stirring without turbulence, avoiding the formation of foams and crusts.

4. Process according to one of Claims 1 to 3, characterised in that the salt is introduced either directly, or in the form of a solution in water, or in a premixture with the whole egg.

5. Concentrated egg white product capable of being obtained by the process according to one of Claims 1 to 4, characterised in that it has a dry solids content of 55 to 65% and contains less than 20,000 microorganism germs per gram after preservation under an inert atmosphere for three months at room temperature and one supplementary week at 37°C.

6. Concentrated whole egg product capable of being obtained by the process according to one of Claims 1 to 4, characterised in that it has a dry solids content of 55 to 62%, an added salt content of between 2 and 4% and preferably from 3 to 3.6% by weight with respect to the final egg product, and contains less than 20,000 microorganism germs per gram after preservation under an inert atmosphere for three months at room temperature and one supplementary week at 37°C.

7. Egg white or whole egg product according to one of Claims 5 or 6, characterised in that it also contains food flavourings.